(19) Europäisches Patentamt
European Patent Office
Office européen des brevets

(11) EP 2 003 253 A2

(12) **EUROPEAN PATENT APPLICATION**
published in accordance with Art. 153(4) EPC

(43) Date of publication:
17.12.2008 Bulletin 2008/51

(51) Int Cl.:
*E03B 1/00* (2006.01)

(21) Application number: 07740639.5

(22) Date of filing: 30.03.2007

(86) International application number:
PCT/JP2007/057203

(87) International publication number:
WO 2007/114370 (11.10.2007 Gazette 2007/41)

(84) Designated Contracting States:
DE FR GB NL

(30) Priority: 31.03.2006 JP 2006099571

(71) Applicants:
• KABUSHIKI KAISHA TOSHIBA
Tokyo 105-8001 (JP)
• City of Kitakyushu
Fukuoka 803-8501 (JP)

(72) Inventors:
• YUKAWA, Atsushi
Tokyo 105-8001 (JP)
• KIYAMA, Satoshi
Kitakyushu City, Fukuoka (JP)
• OISHI, Naoto
Kitakyushu City, Fukuoka (JP)

(74) Representative: HOFFMANN EITLE
Patent- und Rechtsanwälte
Arabellastrasse 4
81925 München (DE)

(54) **WATER DISTRIBUTION INFORMATION MANAGEMENT DEVICE**

(57) Based on the Hazen-Williams approximate expression, an approximate expression computing unit (24) computes daily data acquired by a data acquisition unit (21) which captures, at a constant period, flow rate data and pressure data respectively transmitted from one flow meter which measures the inflow of purified water flowing from a distributing reservoir into a water distribution pipeline network and one pressure meter which measures a pressure in a pipeline at one proper position in the water distribution pipeline network. The approximate expression computing unit (24) also stores a total virtual pipeline extension and a flow rate correction coefficient for each day, which are obtained by using the least squares method, as parameters in a database (25), and computes a pressure value on the basis of the flow rate data and pressure data acquired at a constant period by an online pressure detection unit (26) and a data acquisition means (21) by using the parameters. The approximate expression computing unit supplies this pressure value and an actually measured pressure value to a display device (27) to express/process the values as a QH curve based on a flow rate (Q) and a water head (H), and displays the correlation between the inflow and the water head in the water distribution pipeline network as a graph of the QH curve.

F I G. 2

EP 2 003 253 A2

**Description**

Technical Field

The present invention relates to a water distribution information management apparatus which analyzes pipeline information by capturing the inflow of purified water flowing from one distributing reservoir into a water distribution pipeline network and pressure data at one proper position in the water distribution pipeline network, and displays the relationship between the quantity of water and the pressure on a display device in an easy-to-understand way on the basis of the analysis result.

Background Art

Generally, in Japan, raw water intaken from a river is purified in a water purification plant, and is forcibly fed into a distributing reservoir. The purified water is then distributed from this distributing reservoir into a water distribution pipeline network by gravity flow. When water is to be distributed from the distributing reservoir to the water distribution pipeline network, therefore, it is difficult, in an area with many topographic undulations, to properly hold the water pressure in the water distribution pipeline network.
Recently, under such circumstances, in some area, a water distribution pipeline network is divided into several blocks to be divisionally managed, or pressure reducing valves and the like are used to reduce changes in water pressure due to topographic undulations. This can properly keep the water pressure and reduce water leakage from the water distribution pipeline network. As a consequence, the waste of purified water is eliminated. This leads to an improvement in the profitability of a water utility.
In a recent water distribution monitoring system, a water distribution pipeline network has been improved to optimize water distribution pressure and ascertain water demands and the amount of water leakage. Flow rates and pressures are measured at necessary positions in pipelines to monitor the states of water distribution blocks.
In order to properly manage water distribution blocks, it is effective to ascertain changes in state by effectively using measured data. Under the present circumstances, acquired data are generally used to detect abnormal values with reference to the upper and lower thresholds of pressures and flow rates and create daily and monthly reports.

Disclosure of Invention

As described above, a conventional water distribution monitoring system only acquires data in chronological order but does not analyze acquired measurement data and use the data for the maintenance and management of a water distribution pipeline network.
It is difficult to ascertain the state of a water distribution pipeline network which changes every second. It is also difficult to ascertain water leakage accompanying a deterioration in the water distribution pipeline network with time.
In general, as a means for ascertaining the state of a water distribution pipeline network, pipeline network analysis is often performed. However, since it is necessary to perform analysis by simulation upon setting in advance necessary data such as the information of a water distribution pipeline, the installation level of the pipeline, and flow rate data at each point, it takes much time and labor.
It is an object of the present invention to provide a water distribution information management apparatus which analyzes, using the Hazen-Williams approximate expression, pipeline information which changes by the second on the basis of flow rate data and pressure data acquired from a water distribution pipeline network, processes the analysis result, and displays the resultant data on a display device in an easy-to-understand way, thereby properly managing the water distribution information simply and easily.
A water distribution information management apparatus according to the present invention comprises data acquisition means for capturing, at a constant period, flow rate data and pressure data respectively transmitted from one flow meter which measures an inflow of purified water flowing from a distributing reservoir into a water distribution pipeline network and one pressure meter which measures a pressure in a pipeline at one proper position in the water distribution pipeline network, approximate expression computing means for sequentially capturing daily flow rate data and daily pressure data acquired by the data acquisition means, computing the data on the basis of a Hazen-Williams approximate expression expressed by

$$H_{loss} = 10.67 \times L \times Q^{1.85} \times \alpha / (C^{1.85} \times D^{4.87})$$

where $H_{loss}$ is the water head loss, L is the total virtual pipeline extension (m), Q is the indicated value of the flow meter, C is the current meter count, D is the diameter (mm) of a pipeline, and $\alpha$ is the flow rate correction coefficient for a water distribution block, obtaining a total virtual pipeline extension and a flow rate correction coefficient for each day as parameters by using a least squares method, and storing the parameters in a pipeline state ascertaining database, online pressure detection means for capturing flow rate data and pressure data acquired at the constant period by the data acquisition means, and computing a pressure value by using the parameters stored in the pipeline state ascertaining database on the basis of the Hazen-Williams approximate expression, and a data display device which displays a correlation between the pressure value based on the approximate expression and detected by the online pressure detection means and the flow rate data and the pressure data acquired by the data acquisition means, the display device comprising a QH curve mode processing unit which expresses/processes, as a QH curve, a correlation between a pressure value based on the approximate expression, which is input from the online pressure detection means, and actually measured flow rate data and actually measured pressure data, according to a relationship between a flow rate (Q) and a water head (H), and a display unit which displays, as a graph of a QH curve, a correlation between an inflow and a water head in the water distribution pipeline network which are processed by the QH curve mode processing unit.

Brief Description of Drawings

FIG. 1 is a schematic view showing a target process to which a water distribution information management apparatus according to the present invention is applied;
FIG. 2 is a block diagram showing the first embodiment of the water distribution information management apparatus according to the present invention;
FIG. 3 is a schematic view for explaining a flow rate loss in a case in which a pipeline network is expressed by one pipeline;
FIG. 4 is an enlarged graph showing the correlation between the inflow and the water head in a given time zone in a water distribution block which is processed by a trend mode processing unit in a data display device in the first embodiment; and
FIG. 5 is a graph showing the correlation between the flow rate and the water head in a given time zone in a water distribution block processed by a QH curve mode processing unit in the data display device by using a QH curve in the first embodiment.

Best Mode for Carrying Out the Invention

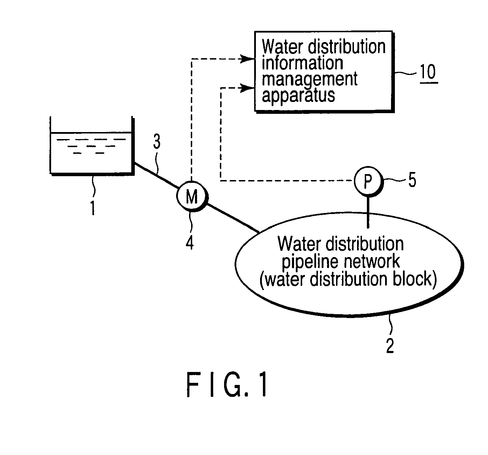

FIG. 1 is a schematic view showing a target process to which a water distribution information monitoring apparatus according to the present invention is applied.
As shown in FIG. 1, this apparatus is targeted to a process of supplying purified water from one distributing reservoir 1 to a water distribution pipeline network (to be referred to as a water distribution block hereinafter) 2. One flow meter 4 for measuring the inflow of purified water is attached to a purified water filling pipe 3 near the inlet of the water distribution block 2. In addition, a pressure meter 5 for measuring the water distribution pressure in the water distribution block 2 is attached to a pipe at a proper position in the water distribution block 2. The data measured by the flow meter 4 and the pressure meter 5 are transmitted to a water distribution information management apparatus 10.

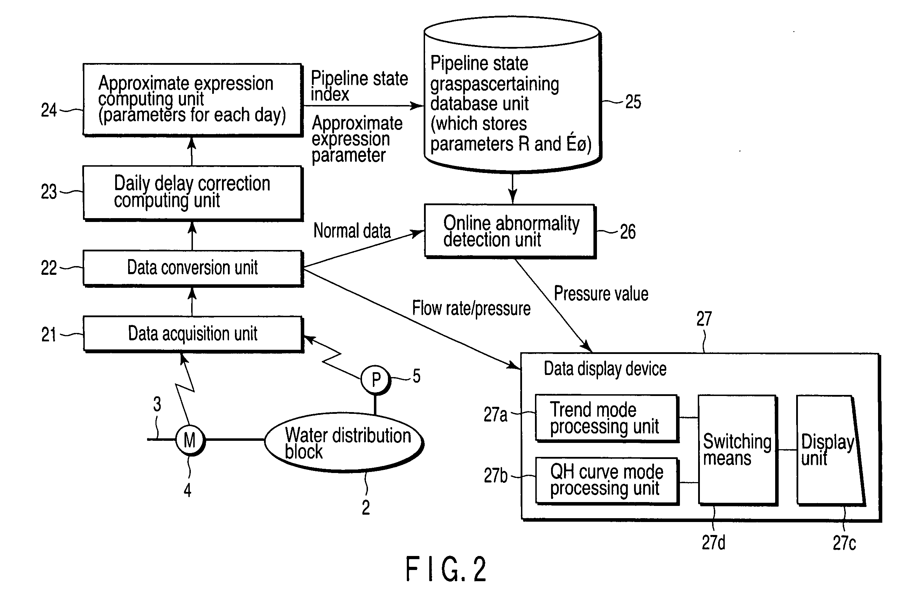

FIG. 2 is a block diagram showing the first embodiment of the water distribution information management apparatus according to the present invention.
Referring to FIG. 2, reference numeral 21 denotes a data acquisition unit which captures the flow rate data and the pressure data, every constant period, e.g., every 0.85 seconds, which are measured by the single flow meter 4 attached to the purified water filling pipe 3 near the inlet of the water distribution block 2 shown in FIG. 1 and the single pressure meter 5 attached to the pipe at the proper position in the water distribution block 2; and 22, a data conversion unit which converts the flow rate data and pressure data acquired by the data acquisition unit 21 into, for example, data with a period necessary for calculation processing, e.g., a period of 5 seconds.
Reference numeral 23 denotes a daily delay correction computing unit which captures the flow rate data and pressure data converted by the data conversion unit 22, stores daily data thereof in a memory (not shown), selects a time error with the strongest correlation between the daily flow rate data and pressure data stored in the memory, and corrects the error. The daily delay correction computing unit 23 corrects the time errors between the measured data sent from the flow meter 4 and the pressure meter 5, respectively.
Reference numeral 24 denotes an approximate expression computing unit which sequentially captures the daily 5-second-period flow rate data and pressure data corrected by the daily delay correction computing unit 23, computes the data on the basis of the Hazen-Williams approximate expression (to be described in detail later), and obtains a total virtual pipeline extension L and a flow rate correction coefficient $\alpha$ for each day as parameters by using the least squares method; and 25, a pipeline state ascertaining database unit which stores the parameters obtained by the approximate expression computing unit 24.

Reference numeral 26 denotes an online pressure detection unit which captures flow rate data and pressure data from the data conversion unit 22 every 5 seconds, and computes a pressure value by using the parameters stored in the pipeline state ascertaining database unit 25 on the basis of the Hazen-Williams approximate expression.

Reference numeral 27 denotes a data display device which displays the correlation between the pressure value based on the approximate expression and detected by the online pressure detection unit 26 and the 5-second-period flow rate data and pressure data converted by the data conversion unit 22.

The data display device 27 comprises a trend mode processing unit 27a which expresses the correlation between the pressure value based on the approximate expression and input by the online pressure detection unit 26 and the actually measured flow rate data and pressure data input by the data conversion unit 22 using a trend graph, a QH curve mode processing unit 27b which expresses the relationship between the flow rate (Q) and the water head (H) as a QH curve on the basis of the pressure value based on the approximate expression and the actually measured flow rate data and pressure data, and a switching means 27d which selects either the trend mode processing unit 27a or the QH curve mode processing unit 27b and outputs the corresponding information to a display unit 27c.

The function of the water distribution information management apparatus having the above arrangement will be described next.

When the data acquisition unit 21 captures the flow rate data and pressure data respectively from the flow meter 4 and the pressure meter 5 every, for example, 0.85 seconds, the data conversion unit 22 converts the flow rate data and pressure data into, for example, 5-second-period data. The daily delay correction computing unit 23 then captures the data.

The daily delay correction computing unit 23 stores the daily flow rate data and pressure data input from the data conversion unit 22 in a memory (not shown), selects a time error having the strongest correlation with respect to the daily flow rate data and pressure data, and corrects it.

Upon sequentially capturing the 5-second-period flow rate data and pressure data obtained by correcting the daily delay, the approximate expression computing unit 24 executes computation based on the Hazen-Williams approximate expression expressed by equation (1) and obtains the total virtual pipeline extension L and flow rate correction coefficient $\alpha$ for each day by using the least squares method as parameters.

$$H_{loss} = 10.67 \times L \times Q^{1.85} \times \alpha / (C^{1.85} \times D^{4.87}) \quad \ldots \quad (1)$$

where

$H_{loss}$ is the water head loss,

L is the total virtual pipeline extension (m),

Q is the indicated value of flow meter,

C is the current meter count (110 in this case),

D is the diameter of pipeline (diameter of inflow pipe: 500 mm), and

$\alpha$ is the flow rate correction coefficient for water distribution block.

Although the Hazen-Williams approximate expression is used to calculate the water head loss of one pipeline, the expression is applied to this pipeline network. In this case, since the pipeline network is not one pipeline, the water head loss sometimes becomes large at the same flow rate, and the coefficient $\alpha$ for increasing the apparent flow rate is approximated by a newly provided expression.

That is, performing approximation by using a modified expression of the Hazen-Williams approximate expression makes it possible to approximate the flow rate and pressure of a pipeline network by one virtual pipeline and compare characteristics. In this case, for a pipeline with a reduction in pressure, a loss cannot be expressed unless the flow rate is virtually increased. For this reason, an approximate expression provided with $\alpha$ corresponding to a flow rate portion is used, and an approximation method is executed to extract a parameter which minimizes the least squares error between the same expression and an actually measured value.

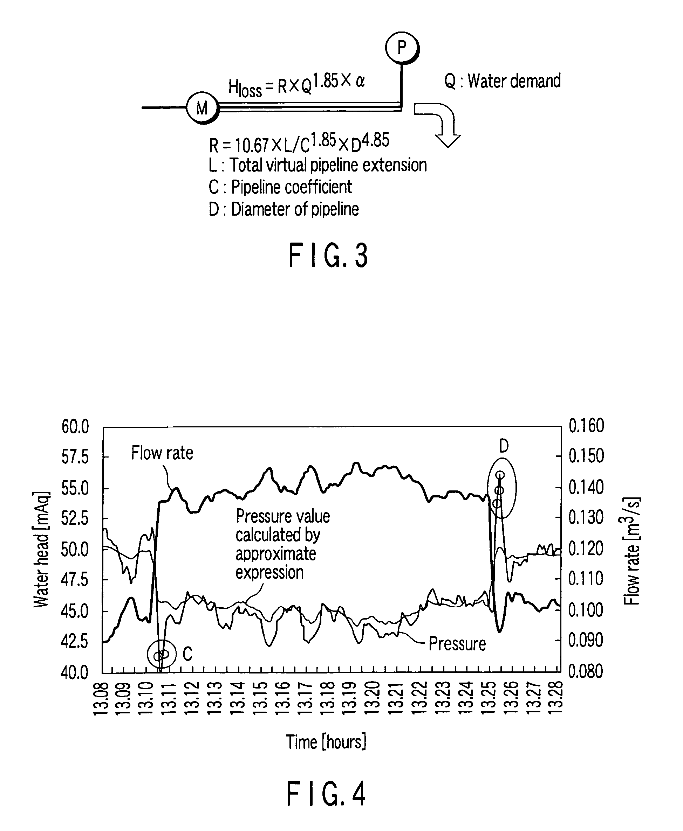

In this case, when a pipeline network is expressed by one pipeline as shown in FIG. 3, the water head loss is given by

$$H_{loss} = R \times Q^{1.85} \times \alpha$$

for

$$R = 10.67 \times L/C^{1.85} \times D^{4.85}$$

where L is the total virtual pipeline extension, C is the pipeline coefficient, and D is the diameter of the pipeline.

The pipeline state ascertaining database unit 25 stores, as parameters, the total virtual pipeline extension L for each day, which is obtained in the above manner, and R and the flow rate correction coefficient $\alpha$, which are obtained by the above equation.

The following is a technique of causing the data display device 27 to display the correlation between the pressure value based on the approximate expression, which is detected by the online pressure detection unit 26 of the water distribution block 2, and the actually measured flow rate and pressure output from the data conversion unit 22.

Upon capturing flow rate data from the data conversion unit 22 every 5 seconds, the online pressure detection unit 26 computes a pressure value by giving the Hazen-Williams approximate expression, for example, the one-day-old parameters R and $\alpha$ stored in the pipeline state ascertaining database unit 25 and actually measured flow rate data, and gives the data display device 27 the pressure value based on the approximate expression and the actually measured flow rate and pressure value output from the data conversion unit 22.

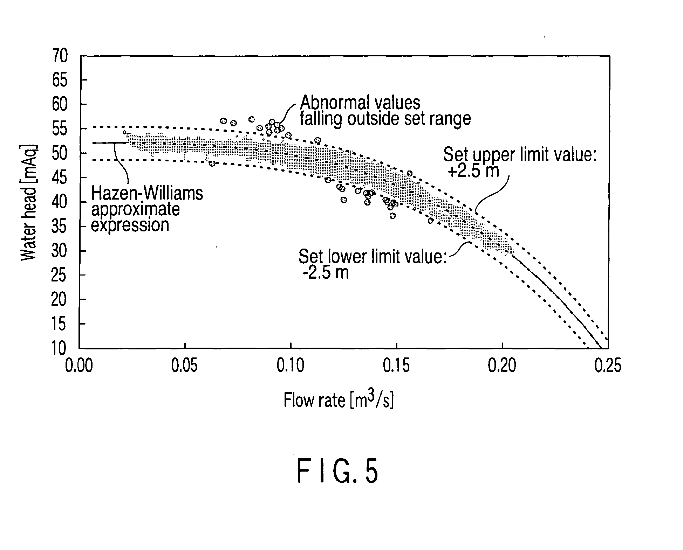

When the data display device 27 captures the pressure value based on the approximate expression and the actually measured flow rate and pressure value, the trend mode processing unit 27a trends the pressure value based on the approximate expression and the actually measured flow rate value and pressure value and plots the resultant data on a graph with the ordinate representing water head and flow rate scales, and the abscissa, a time scale, as shown in FIG. 4. The QH curve mode processing unit 27b plots the pressure value based on the approximate expression as a QH curve, with the ordinate representing a water head (H) scale, and the abscissa, a flow rate (Q) scale, as shown in FIG. 5, and plots a pressure value corresponding to the actually measured flow rate value with respect to the QH curve.

Referring to FIG. 4, the display unit 27c displays an enlarged view of the correlation between the flow rate and the water head in a given time zone (13:00 to 13:30) of the trend graph of one-day-old flow rate and water head in the water distribution block 2 which are processed by the trend mode processing unit 27a of the data display device 27.

As is obvious from FIG. 4, the flow rate always changes, the pressure calculated by approximate expression (1) representing the relationship between the flow rate and the water head has a waveform like that indicated by the thin line, and the actually measured pressure has a waveform like that indicated by the thick line.

Assuming that upper and lower limit values of $\pm2.5$m are set for the pressure based on the approximate expression, it is obvious that abnormal values of flow rate changes can be detected by ascertaining, as abnormal values of changes in water head, portions C and D in FIG. 4 which exceed the upper and lower limit values.

FIG. 5 is the graph of a QH curve, displayed on the display unit 27c under the same conditions as those in FIG. 4, which represents the correlation between the one-day-old flow rate and water head in the water distribution block 2 which are processed by the QH curve mode processing unit 27b of the data display device 27.

As is obvious from the graph shown in FIG. 5, the typical relationship between the flow rate data and pressure in a water distribution block can be easily ascertained by expressing the 5-second-period flow rate data and water head (pressure) data plotted on the time axis of the graph shown in FIG. 4 by using a QH curve.

Assuming that upper and lower limit values of $\pm2.5$m are set for the QH curve plotted by approximating the correlation between the inflow and water head in a water distribution block with equation (1), it is easily known that when actually measured flow rate and pressure data fall outside the range of the set upper and lower limit values, the corresponding values are abnormal values.

As describe above, this embodiment causes the display unit 27c to display the water distribution management data in a water distribution block which is processed by the trend mode processing unit 27a or the QH curve mode processing unit 27b of the data display device 27, upon causing switching means 27d to select either a trend graph or a QH curve. This makes it possible to ascertain the typical relationship between the quantity of water and the pressure in a water distribution block.

Displaying data using a QH curve, in particular, makes it possible to facilitate ascertaining the relationship between the quantity of water and the pressure in a water distribution block and to properly manage water distribution information simply and easily.

Industrial Applicability

The water distribution information management apparatus according to the present invention analyzes pipeline information, which changes every second on the basis of the flow rate and pressure data acquired from a water distribution pipeline network, on the basis of the Hazen-Williams approximate expression, and causes the display device to process and display the result in an easy-to-understand way, thereby allowing to properly manage the water distribution information simply and easily.

**Claims**

1. A water distribution information management apparatus **characterized by** comprising data acquisition means (21) for capturing, at a constant period, flow rate data and pressure data respectively transmitted from one flow meter (4) which measures an inflow of purified water flowing from a distributing reservoir into a water distribution pipeline network and one pressure meter (5) which measures a pressure in a pipeline at one proper position in the water distribution pipeline network, approximate expression computing means (24) for sequentially capturing daily flow rate data and daily pressure data acquired by the data acquisition means, computing the data on the basis of a Hazen-Williams approximate expression expressed by

$$H_{loss} = 10.67 \times L \times Q^{1.85} \times \alpha / (C^{1.85} \times D^{4.87})$$

   where $H_{loss}$ is the water head loss, L is the total virtual pipeline extension (m), Q is the indicated value of the flow meter, C is the current meter count, D is the diameter (mm) of a pipeline, and $\alpha$ is the flow rate correction coefficient for a water distribution block, obtaining a total virtual pipeline extension and a flow rate correction coefficient for each day as parameters by using a least squares method, and storing the parameters in a pipeline state ascertaining database, online pressure detection means (26) for capturing flow rate data and pressure data acquired at the constant period by the data acquisition means, and computing a pressure value by using the parameters stored in the pipeline state ascertaining database on the basis of the Hazen-Williams approximate expression, and a data display device (27) which displays a correlation between the pressure value based on the approximate expression and detected by the online pressure detection means and the flow rate data and the pressure data acquired by the data acquisition means, the display device comprising a QH curve mode processing unit (27b) which expresses/ processes, as a QH curve, a correlation between a pressure value based on the approximate expression, which is input from an online pressure detection means, and actually measured flow rate data and actually measured pressure data, according to a relationship between a flow rate (Q) and a water head (H), and a display unit (27c) which displays a correlation between an inflow and a water head in the water distribution pipeline network which are processed by the QH curve mode processing unit.

2. The water distribution information management apparatus according to claim 1, **characterized in that** the display device (27) comprises, in addition to the QH curve mode processing unit (27b), a trend mode processing unit (27a) which expresses/processes, as a trend graph, a correlation between the pressure value based on the approximate expression and input from the online pressure detection means and the actually measured flow rate data and actually measured pressure data, and switching means (27d) for outputting the correlation to the display unit (27c) upon selecting one of the QH curve mode processing unit and the trend mode processing unit.

Water distribution
information
management _10
apparatus

3

P ~5

1

M

4

Water distribution
pipeline network
(water distribution block)

2

FIG. 1

| Approximate expression computing unit (parameters for each day) ~24 | Pipeline state index → Approximate expression parameter | Pipeline state graspascertaining database unit (which stores parameters R and É⌀) ~25 |

Daily delay correction computing unit ~23

Data conversion unit ~22 → Normal data → Online abnormality detection unit ~26

Data acquisition unit ~21

Flow rate/pressure

Pressure value

3

M ~4

Water distribution block ~2

P ~5

Data display device 27
Trend mode processing unit ~27a
QH curve mode processing unit ~27b
Switching means
Display unit
27d   27c

F I G. 2

$$H_{loss} = R \times Q^{1.85} \times \alpha$$

Q : Water demand

M

P

$$R = 10.67 \times L/C^{1.85} \times D^{4.85}$$

L : Total virtual pipeline extension
C : Pipeline coefficient
D : Diameter of pipeline

## F I G. 3

Flow rate

Pressure value
calculated by
approximate
expression

Pressure

D

C

Water head [mAq]

Flow rate [m³/s]

Time [hours]

## F I G. 4

FIG.5